# EUROPÄISCHE PATENTSCHRIFT

(11) **EP 3 856 625 B1**
(45) Veröffentlichungstag und Bekanntmachung des Hinweises auf die Patenterteilung: **02.04.2025**
(21) Anmeldenummer: 19782934.4
(22) Anmeldetag: 25.09.2019
(51) Int. Cl.: B62M 3/00, G01D 5/14

(54) **KURBELGETRIEBE MIT EINER KURBELWELLE ZUR VERBINDUNG MIT WENIGSTENS EINER FUSS- ODER HANDKURBEL**
CRANK TRANSMISSION WITH A CRANKSHAFT FOR CONNECTION TO AT LEAST ONE FOOT-OPERATED OR HAND-OPERATED CRANK
TRANSMISSION À MANIVELLE COMPRENANT UN ARBRE DE MANIVELLE À RELIER À AU MOINS UNE MANIVELLE AU PIED OU MANUELLE

(30) Priorität: 25.09.2018 DE 102018123575
(43) Veröffentlichungstag der Anmeldung: 04.08.2021
(73) Patentinhaber: Marquardt GmbH, 78604 Rietheim-Weilheim (DE); Pinion GmbH, 73770 Denkendorf (DE)
(72) Erfinder: SCHMITZ, Michael, 73770 Denkendorf (DE); LERMEN, Christoph, 76137 Karlsruhe (DE); WEISSER, Dietmar, 78532 Tuttlingen (DE); GÖTZ, Martin, 78050 Villingen-Schwenningen (DE)
(74) Vertreter: Witte, Weller & Partner Patentanwälte mbB
(86) Internationale Anmeldenummer: PCT/EP2019/075843
(87) Internationale Veröffentlichungsnummer: WO 2020/064827

(56) Entgegenhaltungen:
- EP-A1- 2 156 156
- EP-A2- 2 901 120
- EP-B1- 2 156 156
- EP-B1- 2 225 543
- EP-B1- 2 901 120
- DE-A1- 102007 062 156
- DE-A1- 102014 207 761
- DE-A1- 19 609 981

## Beschreibung

Die Erfindung betrifft ein Kurbelgetriebe mit einer Kurbelwelle zur Verbindung mit wenigstens einer Fuß- oder Handkurbel nach dem Oberbegriff des Anspruchs 1.

Unter einem erfindungsgemäßen Kurbelgetriebe ist hierbei jedes Getriebe für Fahrzeuge zu verstehen, bei denen ein Antrieb über eine von einer Person mittels Körperkraft in Drehung versetzte Kurbel erfolgt und dieses Drehmoment von dort über ein mechanisches Getriebe auf wenigstens ein Vortriebselement wie ein Laufrad oder ein Schaufelrad übertragen wird, also neben herkömmlichen Fahrradgetrieben auch Getriebe für mehrrädrige Fahrzeuge und/oder zusätzlich motorisch angetriebene Fahrzeuge wie sogenannte E-Bikes bzw. Pedelecs sowie andere derartige Fahrzeuge wie Tretboote oder dergleichen.

Kurbelgetriebe für Fahrräder nach dem Oberbegriff des Anspruchs 1 sind im Handel seit einiger Zeit erhältlich.

Mit der Druckschrift DE 198 16 568 A1 ist eine Sensoranordnung zur Erfassung eines Drehmomentes und/oder eines Drehwinkels bekannt geworden. Diese Sensoranordnung beinhaltet durch eine querschnittsverjüngende Formgebung die Ausbildung eines Torsionselementes an einer Welle, wobei die unter Belastung entstehende Verdrehung der Welle bzw. der dabei entstehende Drehwinkel mittels eines magnetischen Sensors aufgenommen und über diesen Drehwinkel auf das aufgebrachte Drehmoment erfasst wird.

Aus dem Dokument DE 196 09 981 A1, welches als der nächste Stand der Technik angesehen wird, ist eine Innenlagereinheit vorwiegend zum Einbau in Fahrrädern mit Messsensorsystem für Drehmoment, Drehwinkel und Drehzahl oder ein Kombination der genannten Messgrössen, bekannt, wobei eine torsionssteife Innenlagerwelle einseitig mit einem übergeschobenen elastischen Element, wie einer Feder, Hülse, deren Kombination oder dgl. mehr zum Kraftfluss durch einen Freilauf oder andere Art der Koppelung verbunden ist und die Drehbewegung auf dieses torsionselastische Element überträgt, das auf der der Verbindung mit der Innenlagerwelle entgegengesetzten Seite mit einer Einrichtung zum Kraftabtrieb versehen ist.

Das Dokument DE 10 2014 207 761 A1 betrifft eine Vorrichtung zum Erfassen eines von einem auf eine Tretlagerwelle eines Fahrrades wirkenden Drehmomentes, umfassend: einen Messaufnehmer, der eingerichtet ist, vom Drehmoment abhängigen Differenzwinkel zwischen einem ersten Wellenabschnitt der Tretlagerwelle und einem zum ersten Wellenabschnitt axial beabstandeten zweiten Wellenabschnitt der Tretlagerwelle zu erfassen; und eine Ausgabeeinrichtung zum Ausgeben eines vom Drehmoment abhängigen Signals basierend auf dem Differenzwinkel.

Weitere Drehmomenterfassungsvorrichtungen sind bekannt aus den Dokumenten EP 2 901 120 A2, DE 10 2007 062 156 A1 und EP 2 156 156 A1.

Demgegenüber hat die Erfindung die Aufgabe, ein Kurbelgetriebe vorzuschlagen, bei dem das über eine Kurbelwelle in ein Kurbelgetriebe eingebrachtes Drehmoment sensorisch erfassbar ist.

Diese Aufgabe wird durch ein Kurbelgetriebe mit den Merkmalen des Anspruchs 1 gelöst.

Dementsprechend weist ein erfindungsgemäßes Getriebe eine Kopplungseinheit zwischen der Kurbelwelle und wenigstens einem mittels der Kurbelwelle angetriebenen Getrieberad auf, die unter Belastung einen drehmomentabhängigen Winkelversatz aufweist zwischen einem kurbelseitigen Aufnahmebereich, der das mittels der Kurbel erzeugte Drehmoment aufnimmt, und einem Abgabebereich auf, der das Drehmoment an das Getrieberad abgibt.

Mittels einer Erfassung dieses Winkelversatzes durch Erzeugung eines der Größe und oder Drehrichtung des Winkelversatzes entsprechenden Sensorsignals ist ein Rückschluss oder die Bestimmung der Größe und oder Drehrichtung des aufgenommenen Drehmomentes möglich.

Die Erfassung der Drehrichtung des aufgenommenen Drehmomentes kann beispielsweise bei Verwendung einer sogenannten Rücktrittbremse von Vorteil sein.

Die Erfassung der Größe des aufgenommenen Drehmomentes kann ggf. in Verbindung mit Getriebedaten zur Datenerfassung z.B**.** der erzeugten Leistung, der Kurbelkraft etc. verwendet werden. Derartige Daten können für die Speicherung und Anzeige der Daten für einen Fahrer oder auch für Steuerungszwecke, z. **B.** für eine automatische Gangschaltung oder für die Steuerung eines Zusatzantriebes, weiterverwendet werden.

Durch die in den Unteransprüchen beanspruchten Merkmale ergeben sich vorteilhafte Weiterbildungen und Ausführungen der Erfindung.

So wird in einer bevorzugten Ausführung der Erfindung eine Wandlereinheit zur Umwandlung des Winkelversatzes in eine Änderung eines magnetischen Flusses und ein magnetfeldsensitiver Sensor zur Erfassung dieser Änderung vorgesehen. Dies stellt eine kostengünstige, betriebssichere und platzsparende Ausführung dar.

Zur Erzeugung eines drehmomentabhängigen Winkelversatzes steht mit einem Torsionselement eine einfache Möglichkeit zur Verfügung. Für die Abhängigkeit des Winkelversatzes vom eingeleiteten Drehmoment ist das Torsionselement wenigstens bereichsweise elastisch, also rückstellend gegen ein Rückstellmoment verformbar, wobei das Rückstellmoment vom Grad der Verformung und damit von der Belastung bzw. dem aufgenommenen Drehmoment abhängt, so dass auch die Größe des so erzeugten Winkelversatzes von der Größe des aufgenommenen Drehmomentes abhängig ist. Durch das Rückstellmoment nimmt das Torsionselement bei schwindender Belastung zudem seine Ausgangsform wieder an.

Erfindungsgemäß wird das Torsionselement in einem Hohlraum der Kurbelwelle angeordnet. Zum einen kann das Torsionselement hierdurch eine gewisse Länge aufweisen, falls dies erforderlich ist, und ist dennoch platzsparend untergebracht. Zum anderen kann in dem Hohlraum die Kopplungsstelle zur Ankopplung an das anzutreibende Getrieberad leicht genau dort angeordnet werden, wo sich das entsprechende Getrieberad befindet. Die Verbindung des Torsionselementes mit der Kurbelwelle kann dabei in unmittelbarer Nähe der Kurbel stattfinden, so dass sichergestellt ist, dass auch tatsächlich das durch die Kurbel eingeleitete Drehmoment vollständig auf das Torsionselement übertragen und sich einstellenden Winkelversatz abgebildet wird.

Das Torsionselement ist in einer derartigen Anwendung zweckmäßigerweise eine Torsionsstange mit der entsprechenden Längenausdehnung zwischen den Verbindungsstellen.

Das Getrieberad wird üblicherweise als Zahnrad ausgebildet und kann durch ein Verbindungselement zwischen dem Torsionselement und dem Getrieberad angetrieben werden. Insbesondere bei Anordnung in einer durchgehenden, wenigstens teilweise hohlen Kurbelwelle ist ein solches Verbindungselement von Vorteil, da es die Wandung der Hohlwelle durchsetzen und so den Abstand zwischen Torsionselement und Getrieberad überbrücken kann.

Zur Begrenzung des veränderbaren Winkelversatzes und/oder zum Schutz des Torsionselementes gegen Überdrehen wird ein mechanischer Endanschlag vorgesehen. Dieser kann beispielsweise durch den Rand eines Langloches gebildet werden, das von dem Verbindungselement durchsetzt wird.

Die Wandlereinheit wird bevorzugt so ausgestaltet, dass sie den Winkelversatz in eine Änderung eines magnetischen Flusses umwandelt. Hierzu werden in einer Weiterbildung der Erfindung wenigstens ein Magnet und wenigstens zwei gegenseitig verdrehbare Leitelemente vorgesehen. Die Leitelemente werden so geformt und angeordnet, dass sie die Form eines innerhalb des Magnetfeldes des Magneten befindlichen Luftspaltes abhängig von ihrer relativen Winkelposition zueinander verändern. Diese winkelabhängige Veränderung des Luftspaltes bewirkt eine winkelabhängige Änderung des gesamten magnetischen Rückflusses. Somit kann durch Erfassung einer Änderung des magnetischen Flusses an einer anderen Stelle der Winkelversatz erfasst und ausgewertet werden.

In einer besonderen Ausführungsform der Erfindung wird ein Leitelement mit einem verzahnten Innenumfang und das andere Leitelement mit einem verzahnten Außenumfang versehen, so dass die Form des Luftspaltes von der Winkelstellung dieser Zähne abhängt. Die beiden Leitelemente können dabei so dimensioniert werden, dass der verzahnte Außenumfang innerhalb des verzahnten Innenumfangs drehen kann, so dass beide Leitelemente axial auf einer Höhe ineinander liegend angeordnet werden können.

Als magnetfeldsensitiver Sensor wird beispielsweise ein Hallsensor verwendet, mit dem die genannten Änderungen des magnetischen Flusses gut erfassbar sind.

Der magnetfeldsensitive Sensor wird weiterhin bevorzugt von den beiden Leitelementen beabstandet an einer konstruktiv geeigneten Stell untergebracht, wo ein für die Messung noch ausreichender magnetischer Fluss vorhanden ist.

Als Magnet wird in einer vorteilhaften Weiterbildung der Erfindung ein Ringmagnet konzentrisch zur Kurbelwelle angeordnet, so dass sich ein äußerer Rückschlusskreis des Magnetfeldes außerhalb des Außenumfangs des Ringmagneten und ein innerer Rückschlusskreis des Magnetfeldes innerhalb des Innenumfangs des Ringmagneten bildet.

Der winkelabhängig veränderbare Luftspaltbereich wird dabei im Bereich des äußeren Rückschlusskreises und der magnetfeldsensitive Sensor im Bereich des inneren Rückschlusskreises oder umgekehrt untergebracht.

Da sich Änderung des magnetischen Fluss durch Änderung der Leitelemente sich auf beide Rückschlusskreise auswirkt, kann so der Sensor mit Abstand zu den Leitelementen angeordnet werden. Die Konstruktion wird hierdurch deutlich vereinfacht.

Durch die Aufteilung des magnetischen Flusses in zwei Rückschlusskreise kann der magnetische Fluss durch Veränderung der Überdrehung der zahnförmigen Leitelemente in beiden Rückschlusskreisen variiert werden, wobei der zweite, innere Rückschlusskreis so ausgebildet werden kann, dass er in Achsumfangsrichtung ein homogenes Magnetfeld erzeugt. Dadurch kann ein magnetfeldsensitiver Sensor ortsfest bezüglich eines nicht drehenden Bauteils, beispielsweise gehäusefest, also ortsfest in Bezug zu einem Getriebegehäuse ausgebildet werden. Das Sensorsignal ist somit bei Drehung der Welle konstant und kann mittels Variation der Überdrehung der Leitelemente der äußeren Rückschlusskreise verändert werden.

Nach sensorischer Erfassung der Flussänderung kann das Sensorsignal durch eine Auswerteeinheit zur Bestimmung des eingeleiteten Drehmomentes verwendet werde.

Durch geeignete Anordnung der drehbaren Leitelemente innerhalb des zu erfassenden Winkelbereichs und/oder die Verwendung mehrerer Sensoren, ist auch eine Erfassung der Drehrichtung mit der gleichen Anordnung möglich.

Die Erfindung ermöglicht insbesondere in Verbindung mit den beschriebenen Weiterbildungen eine robuste, Platz sparende und kostengünstige Sensorik.

Ein Ausführungsbeispiel der Erfindung ist in der Zeichnung dargestellt und wird nachfolgend anhand der Figuren näher erläutert.

Im Einzelnen zeigen
Fig. 1 einen Längsschnitt durch verschiedene Getriebekomponenten und die Sensorik für das Drehmoment des erfindungsgemäßen Getriebes,
Fig. 2 eine Draufsicht auf zwei relativ zueinander verdrehbare Leitelemente in einer ersten Winkelposition,
Fig. 3 eine Draufsicht auf zwei relativ zueinander verdrehbare Leitelemente in einer zweiten Winkelposition und
Fig. 4 eine perspektivische Darstellung der Kurbelwelle mit einem Verbindungsstift als Antriebselement

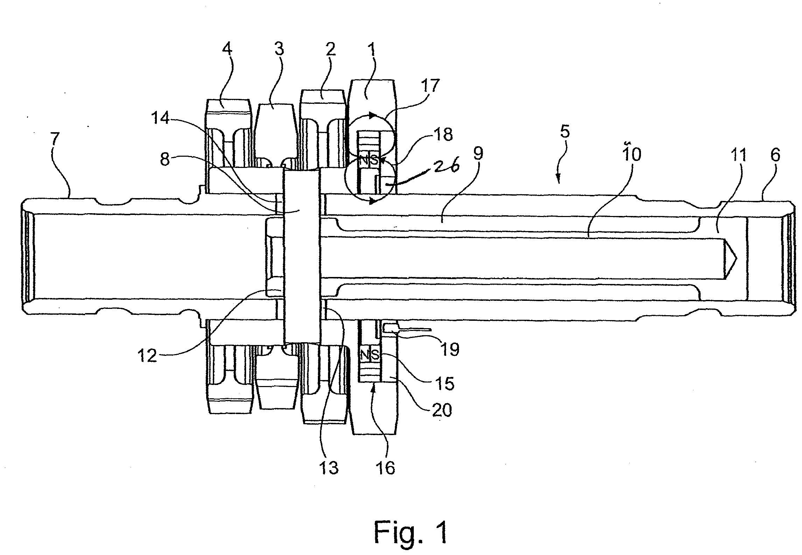

Fig. 1 zeigt die wesentlichen Komponenten eines erfindungsgemäßen Getriebes. Im Einzelnen sind dies verschiedene Getriebezahnräder (1,2,3,4), von denen das erste Getriebezahnrad (1) über eine Kurbelwelle (5) angetrieben wird..

Die Kurbelwelle 5 ist beidseitig mit Verzahnungen (6,7) zur Montage von Fuß-oder Handkurbeln versehen. Ein Verbindungsstift (8) ragt aus der Kurbelwelle heraus und dient zur Verbindung des anzutreibenden Getrieberades (1), wie weiter unten noch erläutert wird.

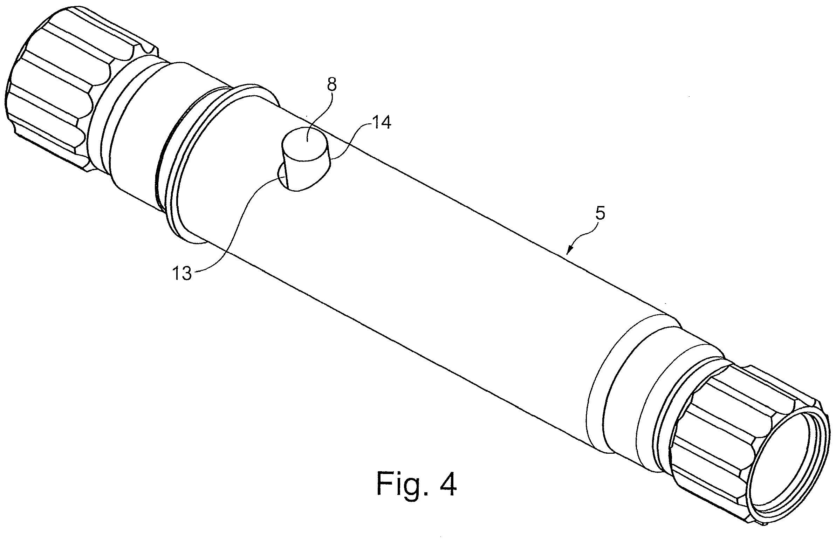

In Fig. 1 ist weiterhin der innere Hohlraum (9) der Kurbelwelle (5) zu sehen, in dem eine Torsionsstange (10) angeordnet ist. Die Torsionsstange ist an einem ihrem kurbelseitigen Aufnahmebereich (11) drehfest mit der Kurbelwelle verbunden, beispielsweise verpresst oder verschweißt oder aufgeschrumpft. An ihrem gegenüberliegenden Abgabebereich (12) ist die Torsionsstange (10) mittels des Verbindungsstiftes (8) als Antriebselement für das Getrieberad (1) drehfest mit diesem verbunden. Um den erfindungsgemäßen Winkelversatz zu ermöglichen ist der Durchlass (13) durch die Wandung der Kurbelwelle (5) als Langloch ausgebildet (s. Fig. 4), dessen Rand (14) einen mechanischen Endanschlag für die Verdrehung des Verbindungsstiftes in dem Durchlass (13) bildet..

Ein Ringmagnet (15) ist in eine Ausnehmung (16) des Getrieberades (1) eingesetzt, wobei die beiden Magnetpole N,S in axialer Richtung angeordnet sind. Hierdurch ergibt sich ein äußerer Rückschlusskreis (17) und ein innerer Rückschlusskreis (18), wie mit Pfeillinien angedeutet ist.

Ein Hallsensor (19) ist im Bereich des inneren Rückschlusskreises angeordnet. Ein ringförmiger Raum (20) ist für die Anordnung der in Fig. 1 nicht dargestellten Leitelemente außerhalb des Hallsensors (19) angeordnet und erstreckt sich weit in den Bereich des äußeren Rückschlusskreises (18).

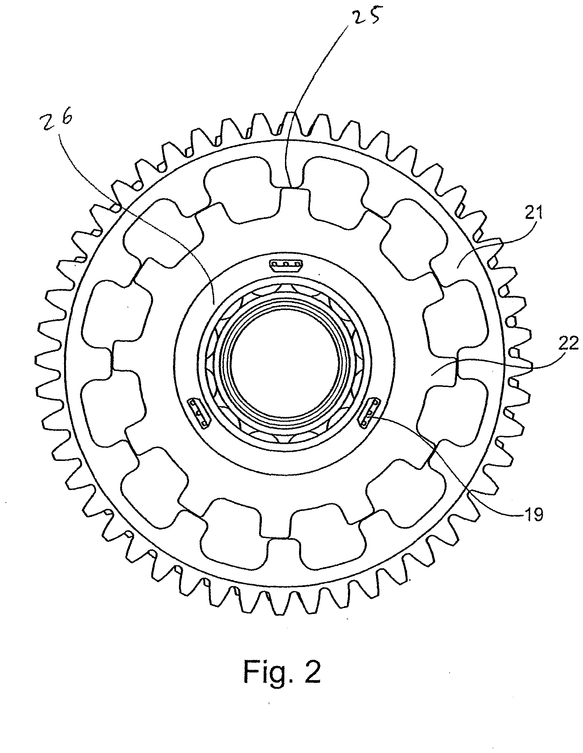

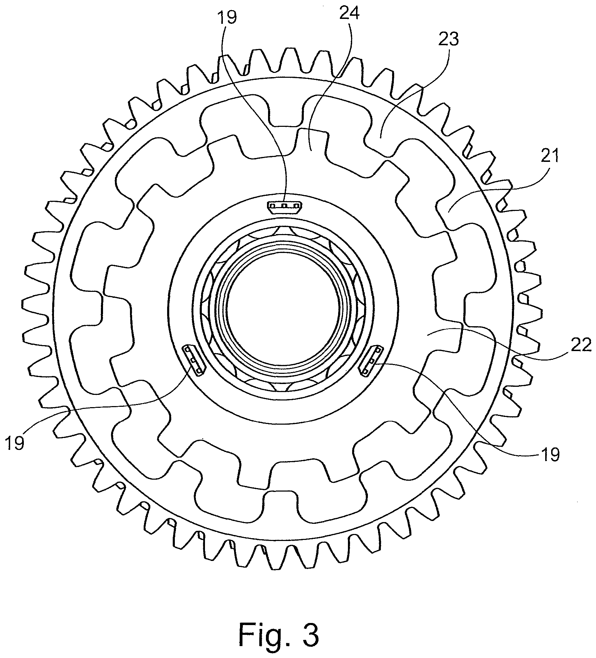

In den Fig. 2 und 3 sind die im ringförmigen Raum (20) unterzubringenden Leitelemente (21, 22) dargestellt. Das äußere Leitelement (21) und das innere Leitelement (22) sind mit einer Innenverzahnung (23) bzw. einer Außenverzahnung (24) versehen, die in einen Luftspalt (25) des äußeren Rückschlusskreises hineinstehen.

Die Verzahnungen (23, 24) formen die Konturen des Luftspaltes (25), wodurch die Form des äußeren Luftspaltes (25) durch Verdrehen der Leitelemente (21, 22) verändert werden kann. Die Fig. 2 und 3 zeigen hierzu zwei verschiedenen Winkelstellungen der Leitelemente (21,22) zueinander. Die Verzahnungen (23, 24) und der Luftspalt (25) befinden sich im Bereich des äußeren Rückschlusskreises (17). Durch das Verdrehen der Leitelemente (21,22) wird jedoch auch der Fluss des Magnetfeldes im inneren Rückschlusskreis (18) und somit auch im inneren Luftspalt (26) verändert und so sensorisch über den Hallsensor (19) erfassbar, wobei die Fig. 2 und 3 die Verwendung mehrerer Hallsensoren veranschaulichen.

Da das Magnetfeld des inneren Luftspaltes (26) bei gleichbleibender Überdrehung der Leitelemente (21, 22) des äußeren Rückschlusskreises homogen ist, bleibt das Sensorsignal bei Drehung der Welle konstant. Durch Veränderung der Überdrehung der Leitelemente der äußeren Rückschlusskreise kann das Magnetfeld im inneren Luftspalt (26) variiert werden. Fließt mehr magnetischer Fluss durch größere Überdrehung der Leitelemente des äußeren Rückschlusskreises, fließt folglich weniger magnetischer Fluss durch den inneren Rückschlusskreis und somit auch durch den inneren Luftspalt (26). Bei Verringerung der Überdrehung der Leitelemente der äußeren Rückschlusskreise entsprechend umgekehrt.

Das innere Leitelement (22) ist mit der Kurbelwelle und das äußere Leitelement(21) mit dem Getrieberad (1) drehfest verbunden. Somit stellt sich zwischen den beiden Leitelementen (21, 22) der durch das Torsionselement (10) erzeugte Winkelversatz ein. Die beiden Leitelemente (21, 22), der Ringmagnet (15) und wenigstens eine Hallsensor (19) bilden also eine Wandlereinheit nach Anspruch 2.

Die beschriebene Anordnung ist in der Lage, ein durch Körperkraft einer Person mittels einer Kurbel auf die Kurbelwelle (5) eingeleitetes Drehmoment in einen sensorisch erfassbaren Winkelversatz umzuwandeln. Hierzu nimmt die Torsionsstange als Torsionselement (10) das Drehmoment auf und verwindet sich bei entsprechender Belastung. Dies kann dadurch der Fall sein, dass das Getriebe dem Drehmoment zunächst einen Widerstand entgegensetzt, beispielsweise durch ein über das Getriebe anzutreibendes Laufrad. Hierdurch ergibt sich ein Winkelversatz im Verlauf der Torsionsstange (10) und damit zwischen dem Aufnahmebereich(11) und dem Abgabebereich (12).

Da die Torsionsstange (10) dort drehfest über den Verbindungsstift (8) mit dem Getrieberad (1) verbunden ist, stellt sich dieser Winkelversatz auch zwischen den Leitelementen (21, 22) ein, was zu einer Änderung des Flusses des Magnetfeldes des Ringmagneten (15) führt. Diese Flussveränderung wird durch den Hallsensor (19) erfasst.

### Bezugszeichenliste:

- 1: Getriebezahnrad
- 2: Getriebezahnrad
- 3: Getriebezahnrad
- 4: Getriebezahnrad
- 5: Kurbelwelle
- 6: Verzahnung
- 7: Verzahnung
- 8: Verbindungsstift
- 9: Hohlraum
- 10: Torsionsstange
- 11: Aufnahmebereich
- 12: Abgabebereich
- 13: Durchlass
- 14: Rand
- 15: Ringmagnet
- 16: Ausnehmung
- 17: Rückschlusskreis
- 18: Rückschlusskreis
- 19: Hallsensor
- 20: Ringförmiger Raum
- 21: Leitelement
- 22: Leitelement
- 23: Innenverzahnung
- 24: Außenverzahnung
- 25: Luftspalt
- 26: Luftspalt

## Patentansprüche

1. Kurbelgetriebe mit einer Kurbelwelle (5) zur Verbindung mit wenigstens einer Fuß-oder Handkurbel und wenigstens einem mittels der Kurbelwelle (5) angetriebenen Getrieberad (1),
- wobei eine Kopplungseinheit (10) zwischen der Kurbelwelle (5) und dem Getrieberad (1) vorgesehen ist,
- wobei die Kopplungseinheit (10) unter Belastung wenigstens zeitweise einen Winkelversatz zwischen einem kurbelseitigen Aufnahmebereich (11) und einem mit dem Getrieberad (1) verbundenen Abgabebereich (12) zur Aufnahme und Abgabe des in die Kurbelwelle (5) eingeleiteten Drehmomentes aufweist,
- wobei die Kopplungseinheit (10) ein Torsionselement (10) umfasst, das in einem Hohlraum (9) der Kurbelwelle (5) angeordnet ist,
**dadurch gekennzeichnet, dass** das Torsionselement (10) an einer Verbindungsstelle in dem Abgabebereich (12) mittels eines Verbindungselementes (8) drehfest mit dem Getrieberad (1) verbunden ist,
- das Verbindungselement (8) sich aus dem Hohlraum (9) der Kurbelwelle (5) durch einen Durchlass (13) in der Wandung der Kurbelwelle (5) hindurch erstreckt und
- das Torsionselement (10) an einer Verbindungsstelle im Aufnahmebereich (11) drehfest mit der Kurbelwelle (5) verbunden ist.

2. Kurbelgetriebe nach Anspruch 1, **dadurch gekennzeichnet, dass** eine Wandlereinheit zur Umwandlung des Winkelversatzes in eine Änderung eines magnetischen Flusses und ein magnetfeldsensitiver Sensor zur Erfassung des Winkelversatzes vorgesehen sind.

3. Kurbelgetriebe nach einem der vorgenannten Ansprüche 1 bis 2, **dadurch gekennzeichnet, dass** das Torsionselement (10) drehmomentabhängig gegen ein Rückstellmoment derart verformbar ist, dass sich der Winkelversatz drehmomentabhängig zwischen dem Aufnahmebereich (11) und dem Abgabebereich (12) ergibt.

4. Kurbelgetriebe nach einem der vorgenannten Ansprüche 1 bis 3, **dadurch gekennzeichnet, dass** das Torsionselement eine Torsionsstange (10) ist.

5. Kurbelgetriebe nach Anspruch 2, **dadurch gekennzeichnet, dass** die Wandlereinheit wenigstens einen Magneten (15) und zwei gegenseitig drehbare magnetische Leitelemente (21, 22) umfasst, die innerhalb eines Luftspaltes (25) durch ihre Form und ihre relative Winkelposition die Form des Luftspaltes (25) winkelabhängig verändern.

6. Kurbelgetriebe nach Anspruch 5, **dadurch gekennzeichnet, dass** ein Leitelement (21) einen verzahnten Innenumfang (23) und das andere Leitelement (22) einen verzahnten Außenumfang (24) aufweist, so dass die Form des Luftspaltes (25) von der Winkelstellung der Zähne abhängt.

7. Kurbelgetriebe nach einem der vorgenannten Ansprüche 2, 5 oder 6, **dadurch gekennzeichnet, dass** ein magnetfeldsensitiver Sensor, wie ein Hall Sensor (19) oder dergleichen vorgesehen ist, um Änderungen eines magnetischen Flusses zu erfassen.

8. Kurbelgetriebe nach einem der vorgenannten Ansprüche 2, 5, 6 oder 7, **dadurch gekennzeichnet, dass** der magnetfeldsensitive Sensor (19) von den Leitelementen (21,22) beabstandet angeordnet ist.

9. Kurbelgetriebe nach einem der vorgenannten Ansprüche 5 oder 6, **dadurch gekennzeichnet, dass** der Magnet ein konzentrisch zur Kurbelwelle (5) angeordneter Ringmagnet (15) ist, so dass ein äußerer Rückschlusskreis (17) des magnetischen Flusses um den Außenumfang des Ringmagneten (15) und ein innerer Rückschlusskreis (18) des magnetischen Flusses um den Innenumfang des Ringmagneten (15) herum verläuft, wobei sich ein winkelabhängig verändernder Bereich des Luftspaltes (25) im Bereich des äußeren Rückschlusskreises (17) und der magnetfeldsensitive Sensor (19) im Bereich des inneren Rückschlusskreises (18) oder umgekehrt befindet.

10. Kurbelgetriebe nach Anspruch 9, **dadurch gekennzeichnet, dass** der winkelabhängig veränderbare Luftspalt (25) im Bereich des äußeren Rückschlusskreises (17) und der magnetfeldsensitive Sensor (19) im Bereich eines Luftspaltes (26) im inneren Rückschlusskreis oder umgekehrt untergebracht ist.

11. Gehäuse nach einem der vorgenannten Ansprüche 2, 5, 7, 8, 9 oder 10, **dadurch gekennzeichnet, dass** der magnetfeldsensitive Sensor (19) ortsfest bezüglich eines nicht drehenden Bauteils, beispielsweise gehäusefest, also ortsfest in Bezug zu einem Getriebegehäuse ausgebildet ist.

12. Kurbelgetriebe nach einem der vorgenannten Ansprüche, **dadurch gekennzeichnet, dass** eine Auswerteeinheit zur Bestimmung des Drehmomentes anhand eines erfassten Sensorsignals vorgesehen ist.

## Claims

1. A crank transmission comprising a crankshaft (5) for connecting to at least one foot crank or hand crank, and at least one transmission wheel (1) driven by means of the crankshaft (5),
- wherein a coupling unit (10) is provided between the crankshaft (5) and the transmission wheel (1),
- wherein the coupling unit (10), under load, at least temporarily has an angular offset between a crank-side receiving region (11) and an output region (12) connected to the transmission wheel (1) for receiving and outputting the torque introduced into the crankshaft (5),
- wherein the coupling unit (10) comprises a torsion element (10) which is arranged in a cavity (9) of the crankshaft (5), **characterized in that**
the torsion element (10) is connected in a rotationally fixed manner to the transmission wheel (1) at a connection point in the output region (12) by means of a connecting element (8),
- the connecting element (8) extends from the cavity (9) of the crankshaft (5) through a passage (13) in the wall of the crankshaft (5), and
- the torsion element (10) is connected in a rotationally fixed manner to the crankshaft (5) at a connection point in the receiving region (11).

2. The crank transmission according to claim 1, **characterized by** providing a transducer unit for converting the angular offset into a change in a magnetic flux, and a magnetic field-sensitive sensor for detecting the angular offset.

3. The crank transmission according to any one of the preceding claims 1 to 2, **characterized in that** the torsion element (10) is deformable in a torque-dependent manner against a restoring torque such that the angular offset between the receiving region (11) and the output region (12) results in a torque-dependent manner.

4. The crank transmission according to any one of the preceding claims 1 to 3, **characterized in that** the torsion element is a torsion bar (10).

5. The crank transmission according to claim 2, **characterized in that** the transducer unit comprises at least one magnet (15) and two magnetic guide elements (21, 22) that can be rotated with respect to each other, wherein the guide elements, within an air gap (25), change the shape of the air gap (25) in an angle-dependent manner by their shape and their relative angular position.

6. The crank transmission according to claim 5, **characterized in that** one guide element (21) comprises a toothed inner circumference (23) and the other guide element (22) comprises a toothed outer circumference (24), such that the shape of the air gap (25) depends on the angular position of the teeth.

7. The crank transmission according to any one of the preceding claims 2, 5 or 6, **characterized in that** a magnetic field-sensitive sensor, such as a Hall sensor (19) or the like, is provided to detect changes in a magnetic flux.

8. The crank transmission according to any one of the preceding claims 2, 5, 6 or 7, **characterized in that** the magnetic field-sensitive sensor (19) is arranged spaced apart from the guide elements (21, 22).

9. The crank transmission according to any one of the preceding claims 5 or 6, **characterized in that** the magnet is a ring magnet (15) arranged concentrically to the crankshaft (5), such that an outer return circuit (17) of the magnetic flux extends around the outer circumference of the ring magnet (15) and an inner return circuit (18) of the magnetic flux extends around the inner circumference of the ring magnet (15), wherein a region of the air gap (25) that changes depending on the angle is located in the area of the outer return circuit (17) and the magnetic field-sensitive sensor (19) is located in the area of the inner return circuit (18), or vice versa.

10. The crank transmission according to claim 9, **characterized in that** the air gap (25) that changes depending on the angle is arranged in the area of the outer return circuit (17) and the magnetic field-sensitive sensor (19) is arranged in the area of an air gap (26) in the inner return circuit, or vice versa.

11. A housing according to any one of the preceding claims 2, 5, 7, 8, 9 or 10, **characterized in that** the magnetic field-sensitive sensor (19) is configured to be stationary relative to a non-rotating component, for example stationary relative to the housing, i.e. stationary relative to a transmission housing.

12. The crank transmission according to any one of the preceding claims, **characterized in that** an evaluation unit is provided for determining the torque by means of a detected sensor signal.

## Revendications

1. Transmission à manivelle comportant un vilebrequin (5) destiné à être relié à au moins une manivelle de démarrage à pied ou à main et à au moins une roue de transmission (1) entraînée au moyen du vilebrequin (5),
- dans laquelle une unité d'accouplement (10) est prévue entre le vilebrequin (5) et la roue de transmission (1),
- dans laquelle l'unité d'accouplement (10) présente, sous chargement, au moins temporairement, un décalage angulaire entre une zone de réception (11) côté manivelle et une zone de distribution (12) reliée à la roue de transmission (1) pour la réception et la distribution du couple de rotation introduit dans le vilebrequin (5),
- dans laquelle l'unité d'accouplement (10) comprend un élément de torsion (10) qui est disposé dans une cavité (9) du vilebrequin (5),
**caractérisée en ce que** l'élément de torsion (10) est relié de manière solidaire en rotation à la roue de transmission (1) au moyen d'un élément de liaison (8) au niveau d'un point de liaison dans la zone de distribution (12),
- l'élément de liaison (8) s'étend hors de la cavité (9) du vilebrequin (5) à travers un passage (13) dans la paroi du vilebrequin (5) et
- l'élément de torsion (10) est relié de manière solidaire en rotation au vilebrequin (5) au niveau d'un point de liaison dans la zone de réception (11).

2. Transmission à manivelle selon la revendication 1, **caractérisée en ce que** sont prévus une unité de conversion permettant de convertir le décalage angulaire en une modification d'un flux magnétique et un capteur sensible au champ magnétique permettant de détecter le décalage angulaire.

3. Transmission à manivelle selon l'une des revendications précédentes 1 à 2, **caractérisée en ce que** l'élément de torsion (10) est déformable en fonction du couple de rotation contre un couple de rappel de telle sorte que le décalage angulaire résulte en fonction du couple de rotation entre la zone de réception (11) et la zone de distribution (12).

4. Transmission à manivelle selon l'une des revendications précédentes 1 à 3, **caractérisée en ce que** l'élément de torsion est une bielle de torsion (10).

5. Transmission à manivelle selon la revendication 2,
**caractérisée en ce que** l'unité de conversion comprend au moins un aimant (15) et deux éléments de guidage (21, 22) magnétiques rotatifs l'un par rapport à l'autre qui, à l'intérieur d'un entrefer (25), modifient en fonction de l'angle la forme de l'entrefer (25) par leur forme et leur position angulaire relative.

6. Transmission à manivelle selon la revendication 5,
**caractérisée en ce qu'**un élément de guidage (21) présente une circonférence intérieure dentée (23) et l'autre élément de guidage (22) présente une circonférence extérieure dentée (24), de sorte que la forme de l'entrefer (25) dépend de la position angulaire des dents.

7. Transmission à manivelle selon l'une des revendications précédentes 2, 5 ou 6, **caractérisée en ce qu'**un capteur sensible au champ magnétique, tel qu'un capteur à effet Hall (19) ou similaire, est prévu afin de détecter des modifications d'un flux magnétique.

8. Transmission à manivelle selon l'une des revendications précédentes 2, 5, 6 ou 7, **caractérisée en ce que** le capteur (19) sensible au champ magnétique est disposé à distance des éléments de guidage (21, 22).

9. Transmission à manivelle selon l'une des revendications précédentes 5 ou 6, **caractérisée en ce que** l'aimant est un aimant annulaire (15) disposé de manière concentrique par rapport au vilebrequin (5), de sorte qu'un circuit de fermeture extérieur (17) du flux magnétique s'étend autour de la circonférence extérieure de l'aimant annulaire (15) et un circuit de fermeture intérieur (18) du flux magnétique s'étend autour de la circonférence intérieure de l'aimant annulaire (15), dans laquelle une zone de l'entrefer (25) se modifiant en fonction de l'angle est située dans la zone du circuit de fermeture extérieur (17) et le capteur (19) sensible au champ magnétique est situé dans la zone du circuit de fermeture intérieur (18), ou inversement.

10. Transmission à manivelle selon la revendication 9,
**caractérisée en ce que** l'entrefer (25) se modifiant en fonction de l'angle est logé dans la zone du circuit de fermeture extérieur (17) et le capteur (19) sensible au champ magnétique est logé dans la zone d'un entrefer (26) dans le circuit de fermeture intérieur, ou inversement.

11. Boîtier selon l'une des revendications précédentes 2, 5, 7, 8, 9 ou 10,
**caractérisé en ce que** le capteur (19) sensible au champ magnétique est réalisé de manière fixe par rapport à un composant non rotatif, par exemple fixe par rapport au boîtier, c'est-à-dire fixe par rapport à un boîtier de transmission.

12. Transmission à manivelle selon l'une des revendications précédentes, **caractérisée en ce qu'**est prévue une unité d'évaluation permettant de déterminer le couple de rotation à l'aide d'un signal de capteur détecté.
